Europäisches Patentamt

European Patent Office

Office européen des brevets

(11) Publication number: **0 340 794**
**A2**

## (12) EUROPEAN PATENT APPLICATION

(21) Application number: **89108163.0**

(22) Date of filing: **05.05.89**

(51) Int. Cl.4: **H02J 7/00**

(30) Priority: **06.05.88 JP 109161/88**

(43) Date of publication of application:
**08.11.89 Bulletin 89/45**

(84) Designated Contracting States:
**DE GB SE**

(71) Applicant: **NEC CORPORATION**
**33-1, Shiba 5-chome, Minato-ku**
**Tokyo 108(JP)**

(72) Inventor: **Tanaka, Mituru c/o NEC Corporation**
**33-1, Shiba 5-chome**
**Minato-ku Tokyo(JP)**

(74) Representative: **Vossius & Partner**
**Siebertstrasse 4 P.O. Box 86 07 67**
**D-8000 München 86(DE)**

(54) Portable apparatus with variable rating battery charger for recharging interchangeable battery packs.

(57) In a portable radio telephone apparatus, a desired one of interchangeable battery packs (2) is mounted. Each battery pack (2) contains a rechargeable battery (24) of a particular ampere-hour rating and a switch (23) for identifying the ampere-hour rating of the battery being used. In one embodiment, multiple charging circuits (31, 32) are selectively connected to the battery in accordance with the identification given by the switch for charging it with a current that is optimum for the battery's ampere-hour rating. In another embodiment, the charging circuit includes a switching regulator circuit for generating a charging voltage that can be varied in accordance with a control signal applied thereto. The control signal is derived by detecting a difference between the charging voltage and a reference voltage. The switching regulator controls the charging voltage so that the voltage difference reduces to zero.

FIG. 1

Xerox Copy Centre

## Portable Apparatus With Variable Rating Battery Charger For Recharging Interchangeable Battery Packs

This invention relates to a portable apparatus such as radio telephone having a provision for carrying interchangeable rechargeable battery packs.

In a known radio telephone apparatus, rechargeable batteries of different ampere-hour ratings can be mounted to meet user's specific needs. For example, a battery with low ampere-hour rating is used for short-term use and one with high ampere-hour rating for long-term use. A battery charger is also mounted in the apparatus to recharge the battery when battery voltage drops below a specified level. However, the charger is designed to deliver a current that is optimum only for the battery with the lowest ampere-hour rating. Therefore, the time taken to charge the other batteries increases with their ratings and would become impractically long with the battery of the highest ampere-hour rating.

It is therefore an object of the present invention to provide a portable apparatus powered with a rechargeable battery of a desired ampere-hour rating and provided with a battery charger that charges the mounted battery with a current that is optimum for any of the batteries that can be used with the apparatus.

According to the present invention, the portable apparatus comprises means for mounting one of a plurality of interchangeable battery packs in the apparatus. The battery packs respectively contain rechargeable batteries of different ampere hour ratings. The battery of the mounted battery pack is charged with an optimum current that is determined by the ampere hour rating of the charged battery.

In a first preferred form of the present invention, each of the interchangeable battery packs includes means for identifying the ampere hour rating of the battery contained therein, and the charging means includes a plurality of charging circuits connected to the battery of the mounted pack in response to the identifying means, each of the charging circuits generating different currents respectively in accordance with the different ampere hour ratings.

In a second preferred form of the invention, the charging circuit includes a switching regulator circuit for deriving a variable charging voltage from an external voltage in accordance with a control signal applied thereto, and a control circuit for detecting a difference between the variable voltage and a reference voltage and applying the difference as the control signal to the switching regulator so that the difference reduces substantially to zero.

## BRIEF DESCRIPTION OF THE DRAWINGS

The present invention will be described in further detail with reference to the accompanying drawings, in which:

Fig. 1 is a circuit diagram of a radio telephone apparatus according to a first embodiment of the present invention; and

Fig. 2 is a circuit diagram of a radio telephone apparatus according to a second embodiment of the present invention.

## DETAILED DESCRIPTION

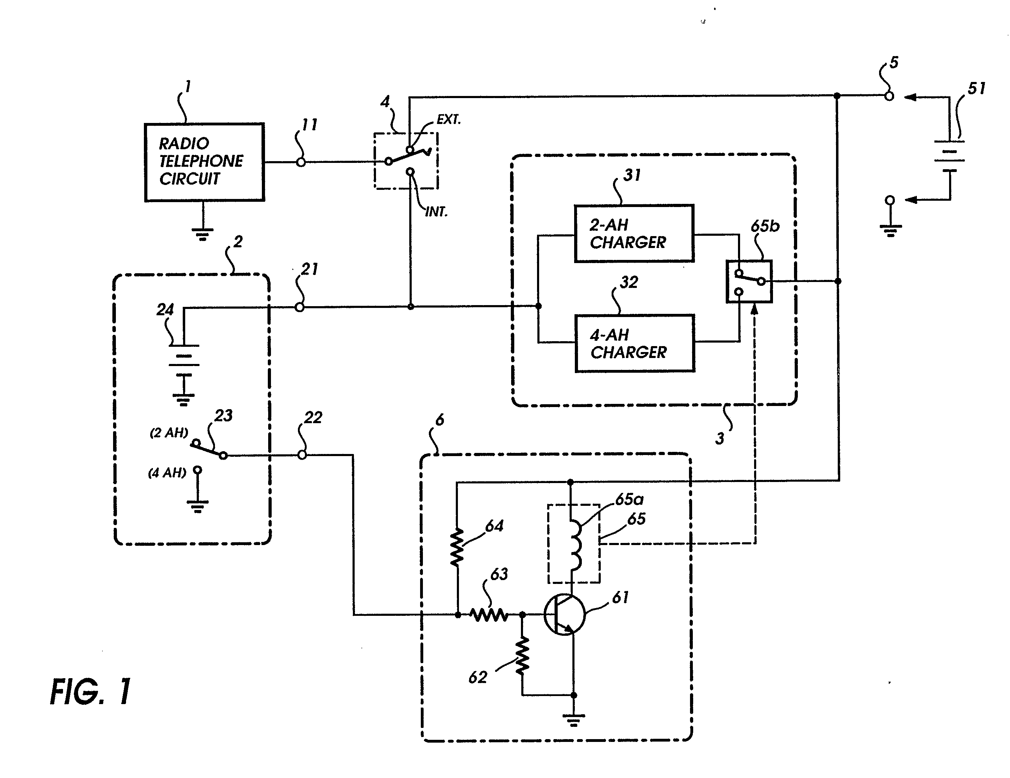

Referring now to Fig. 1, there is shown a radio telephone apparatus according to a first embodiment of the present invention. The apparatus includes a radio telephone circuit 1 that is coupled through a power terminal 11 to the moving contact arm of a manually operated power switch 4. In the illustrated embodiment, the power switch 4 has two positions; an "EXTERNAL MODE" terminal which is connected to the positive terminal 5 of an external voltage source 51 when the apparatus is being recharged and an "INTERNAL MODE" terminal which is connected to the positive terminal 21 of an internal rechargeable battery pack 2 when the apparatus is field use. Battery pack 2 includes a manually operated switch 23 and a battery 24 which may be of 2-AH (ampere-hour) or a 4-AH rating, for example. Switch 23 has 2- and 4-AH positions which respectively present an open-circuit condition and a short-circuit condition to a sense terminal 22 to which the input of a control circuit 6 is connected.

A charging circuit 3 is connected between the positive terminal 5 of the external voltage source and the positive terminal 21 of the battery pack 2 for charging the battery 24. Charging circuit 3 includes a 2-AH charger 31 which provides charging at a rate that is optimum for 2-AH batteries and a 4-AH charger 32 which provides charging at a rate optimum for 4-AH batteries. Typically, the optimum current value for charging 2-AH batteries is 1.2 amperes with a charging time of 100 minutes and the optimum current value for charging 4-AH batteries is 2.4 amperes with the same charging time as 2-AH batteries.

The output terminals of the chargers 31 and 32 are connected together to the positive terminal 21 of the battery pack 2. The input terminals of the chargers 31 and 32 are connected respectively to stationary contacts 65b of a relay 65 having a winding 65a provided in the control circuit 6, the moving arm of the relay contacts 65b being connected to the positive terminal 5 of the external voltage source.

Control circuit 6 comprises a transistor 61 with the emitter being connected to ground and the collector being connected through the relay winding 65a to the positive terminal 5. The base of transistor 61 is biased at the voltage at a junction between resistors 62 and 63 which are connected in series between the sense terminal 22 and ground and further connected in series to a resistor 64 through which the voltage at the external positive terminal 5 is supplied.

When charging a 2-AH battery pack, switch 4 is connected to the "EXTERNAL MODE" position, coupling the radio telephone circuit 1 to receive power from the external voltage source 51 to allow radio communication to proceed during the time the battery pack 2 is being recharged. Switch 23 is connected to the 2-AH position, presenting an open-circuit condition to the sense terminal 22. Thus, transistor 61 is automatically turned on, energizing the relay winding 65a to switch the relay contact 65b to the 2-AH position. Voltage at the external positive terminal 5 is applied to the 2-AH charger 31. The 2-AH battery 24 is therefore recharged with an optimum current of 1.2 amperes that fully charges the battery within 100 minutes.

When charging a 4-AH battery, switch 4 remains connected to the "EXTERNAL MODE" position, and switch 23 is turned to the 4-AH position, presenting a short-circuit condition to the sense terminal 22. Transistor 61 is automatically turned off, deenergizing the relay winding 65a. The voltage at the external positive terminal 5 is switched to the 4-AH charger 32 that recharges a 4-AH battery 24 with a current of 2.4 amperes which completes the recharging operation within 100 minutes.

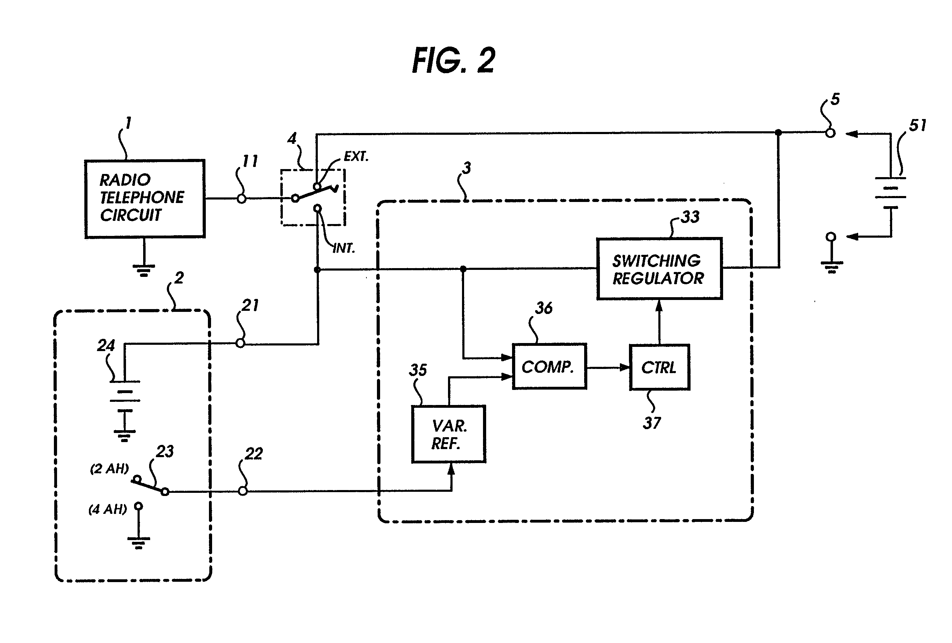

An alternative form of the charging circuit 3 is illustrated in Fig. 2. This charging circuit comprises a switching regulator 33 of the type that generates a desired charging voltage by chopping a current from the external source 51 into constant-width pulses of a controlled frequency which is determined by a control signal from a controller 37 or by chopping it into constant-frequency pulses of a controlled duration determined by the control signal. The output of switching regulator 33 is applied to the positive terminal 21 of battery pack 2 as a charging voltage and further to one input of a comparator 36. To the other input of comparator 36 is supplied a particular reference voltage from a reference circuit 35 which determines the reference voltage in response to a circuit condition at the sense terminal 22. The output of comparator 36 represents a difference between the voltage supplied to the battery pack 2 and the reference voltage determined by the ampere-hour rating of the battery being used. Controller 37 responds to the output of comparator 36 by generating the control signal so that the difference between the voltages applied to the comparator 36 reduces to substantially zero. In this way, the charging voltage from switching regulator 33 is automatically controlled in accordance with the ampere-hour setting of switch 23.

The foregoing description shows only preferred embodiments of the present invention. Various modifications are apparent to those skilled in the art without departing from the scope of the present invention which is only limited by the appended claims. Therefore, the embodiments shown and described are only illustrative, not restrictive.

**Claims**

1. A portable apparatus in which one of a plurality of interchangeable battery packs is mounted, said battery packs respectively containing rechargeable batteries of different ampere-hour ratings, comprising means for charging the battery of said mounted battery pack with an optimum current that is determined by the ampere hour rating of the charged battery.

2. A portable apparatus as claimed in claim 1, wherein each of said interchangeable battery packs includes means for identifying the ampere hour rating of the battery contained therein, and wherein said charging means includes a plurality of charging circuits selectively connected to said battery of the mounted pack in response to said identifying means, each of said charging circuits generating different currents respectively in accordance with said different ampere hour ratings.

3. A portable apparatus as claimed in claim 1, wherein each of said interchangeable battery packs includes means for identifying the ampere-hour rating of the battery contained therein, and wherein said charging means includes:
means for deriving a variable voltage from an external voltage in accordance with a control signal applied thereto and supplying said variable voltage to the battery of said mounted pack; and
means for detecting a difference between said variable voltage and a reference voltage and applying said difference as said control signal to said deriving means so that said difference reduces substantially to zero.

4. A portable apparatus as claimed in any of claims 1 to 3, wherein said apparatus is a radio telephone apparatus.

FIG. 1

# FIG. 2

EP 0 340 794 A2